# EUROPÄISCHE PATENTANMELDUNG

(11) **EP 2 253 873 A1**
(43) Veröffentlichungstag der Anmeldung: **24.11.2010**
(21) Anmeldenummer: 09006794.3
(22) Anmeldetag: 20.05.2009
(51) Int. Cl.: F16L 3/10

(54) **Rohrschelle**

(71) Anmelder: WALTER STAUFFENBERG GMBH & CO. KG, 58791 Werdohl (DE)
(72) Erfinder: König, Ulrich Stefan, 58849 Herscheid (DE)
(74) Vertreter: Kötter, Ulrich

(57) **Zusammenfassung**

Die Erfindung betrifft eine Vorrichtung zur Befestigung von Rohren oder Schläuchen, umfassend zwei miteinander verbindbarer Befestigungsteile mit Ausnehmungen, welche im montierten Zustand eine Durchführung bilden. Die Befestigungsteile (2) sind jeweils beidseitig der Ausnehmung (3) mit einem kammartigen Profil (4) versehen, welches durch abwechselnd angeordnete Nuten (5) und Vorsprünge (6) gebildet ist, wobei die Nuten (5) und Vorsprünge (6) jeweils spiegelverkehrt versetzt zu den jeweils gegenüberliegend angeordneten Nuten (5) und Vorsprüngen (6) angeordnet sind, derart, dass die Vorsprünge (6) eines Befestigungsteils (2) bei der Montage jeweils in die Nuten (5) des gegenüberliegenden Befestigungsteils (2) in Eingriff bringbar sind und, bei Verdrehung eines Befestigungsteils (2) um 180 Grad relativ zum gegenüberliegenden Befestigungsteil (2), die Vorsprünge (6) der beiden Befestigungsteile aufeinander liegend positionierbar sind, wobei die Nuten (5) jeweils gegenüberliegend angeordnet sind.

## Beschreibung

Die Erfindung betrifft eine Vorrichtung zur Befestigung von Rohren oder Schläuchen nach dem Oberbegriff des Patentanspruchs 1.

Vorrichtungen der vorgenannten Art dienen zur Befestigung von Rohren, Schläuchen oder Kabeln. Derartige Schellen sind bisher jeweils auf einem Durchmesser des zu befestigenden axialen Körpers zugeschnitten. Im Bereich der Hydraulik werden die Leitungen (Rohre oder Schläuche) entweder mit dem Außendurchmesser oder mit der sogenannten Nennweite spezifiziert. Diese Nennweite bezieht sich dabei auf den Innendurchmesser. Bei der Auslegung eines Hydrauliksystems wird zunächst die Nennweite der Leitung definiert. Basierend auf dem auftretenden Drücken im Innern wird anschließend die erforderliche Wandstärke und damit auch der Außendurchmesser definiert.

Durch neue Materialien mit besseren technologischen Eigenschaften sind die Herstelfer von Hydraulikleitungen in der Lage, bei gleichbleibendem Innendurchmesser und zu berücksichtigenden Drücken die Wandstärke und somit auch den Außendurchmesser zu reduzieren- Das bedeutet, bisher war einem Innendurchmesser jeweils ein bestimmter Außendurchmesser und damit ein bestimmter Schellendurchmesser zugeordnet. Auf Grund der Verfügbarkeit der vorgenannten Materialien kann es nunmehr passieren, dass der Anwender einen "normalen" Schlauch mit einer Nennweite von 1/2" und einem Außendurchmesser von 19 mm einsetzt, an der gleichen Maschine auch einen "Kompaktschlauch" mit einer Nennweite von 1/2" und einem Außendurchmesser von 17 mm einsetzt. Da der Monteur oftmals nicht weiß, welchen Schlauchtyp er vorfindet, ist es erforderlich, für jeden Schlauchtyp eine entsprechende Schelle vorzuhalten.

Hier will die Erfindung Abhilfe schaffen. Der Erfindung liegt die Aufgabe zu Grunde, eine Vorrichtung zu schaffen, welche eine Befestigung von Rohren bzw. Schläuchen unterschiedlicher Durchmesser ermöglicht. Gemäß der Erfindung wird diese Aufgabe durch die Merkmale des kennzeichnenden Teils des Patentanspruchs 1 gelöst.

Mit der Erfindung ist eine Vorrichtung geschaffen, welche eine Befestigung von Rohren bzw. Schläuchen unterschiedlicher Durchmesser ermöglicht. Durch die Anordnung der kammartigen Profile mit jeweils spiegelverkehrt zueinander angeordneten Nuten und Vorsprüngen ist eine Variierung des Durchmessers der Durchführung durch die Lage des oberen Befestigungsteils zum unteren Befestigungsteil ermöglicht.

In Weiterbildung der Erfindung sind die beiden Befestigungsteile zumindest an ihren zueinander zugewandten Seiten, bevorzugt jedoch insgesamt identisch ausgebildet. Hierdurch ist eine Reduzierung der Herstellungskosten ermöglicht. Bei identischer Ausgestaltung der Befestigungsteile kann darüber hinaus die Anzahl vorzuhaltender Befestigungsteile halbiert werden. Bevorzugt sind die Befestigungsteile im Wesentlichen aus Kunststoff, insbesondere aus einem Polymerwerkstoff ausgebildet.

In vorteilhafter Ausgestaltung der Erfindung ist wenigstens eine Ausnehmung eines Befestigungsteils mit einer Elastomerschicht versehen. Hierdurch ist die Anlage der Schlauchschelle an die unterschiedlichen Schlauch- bzw. Rohrdurchmesser verbessert.

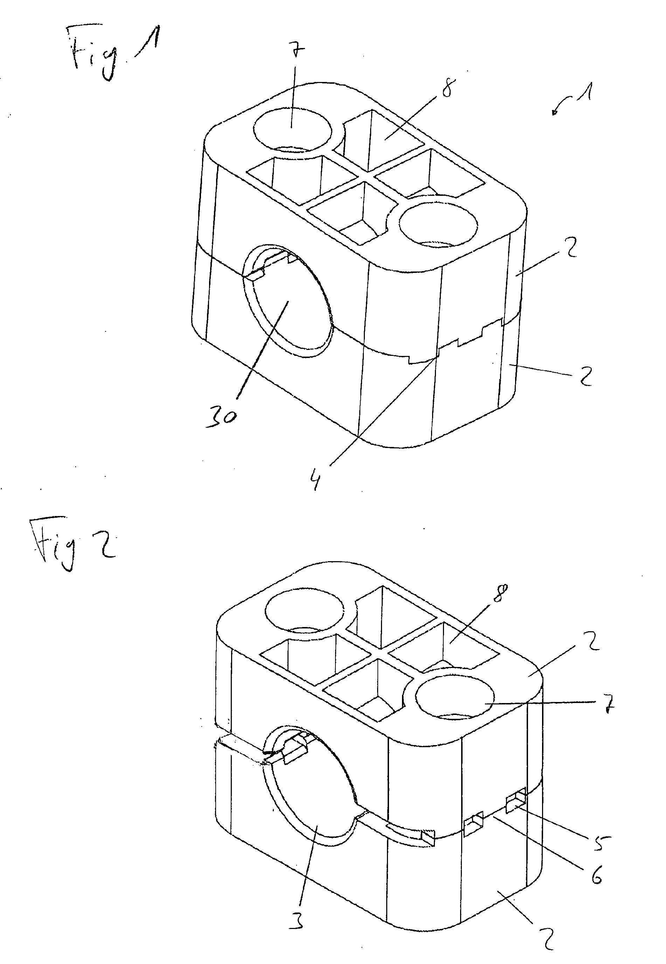

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen
- Figur 1: die dreidimensionale Darstellung einer erfindungsgemäßen Vorrich- tung im Zustand "kleiner Durchmesser" und
- Figur 2: die Darstellung der Vorrichtung aus Figur 1 in der Position "großer Durchmesser".

Die als Ausführungsbeispiel gewählte Vorrichtung ist in Form einer Schelle 1 ausgebildet, welche aus zwei Schellenhälften 2 zusammengesetzt ist. Die Schellenhälften 2 sind im Wesentlichen quaderförmig ausgebildet, wobei die Seitenkanten abgerundet ausgebildet sind. Mittig ist in die Schellenhälften 2 in Querrichtung jeweils eine Ausnehmung 3 mit halbkreisförmigem Querschnitt eingebracht. Im Ausführungsbeispiel sind die Schellenhälften 2 aus Polypropylen (PP) hergestellt.

Beidseitig der Ausnehmung 3 sind die Befestigungsteile 2 außen mit einem kammartigen Profil 4 versehen. Die kammartigen Profile 4 sind durch abwechselnd angeordnete Nuten 5 und Vorsprünge 6 gebildet, wobei die Nuten 5 und Vorsprünge 6 jeweils spiegelverkehrt versetzt zu den jeweils gegenüberliegend angeordneten Nuten 5 und Vorsprüngen 6 angeordnet sind. Im Ausführungsbeispiel sind zu beiden Seiten der Schellenhälften zwei jeweils drei Nuten 5 und drei Vorsprünge 6 angeordnet; selbstverständlich sind auch jedwede andere kammartige Ausgestaltungen möglich, welche die erfindungsgemäße Anordnung der beiden Schellenhälften 2 zueinander zur Erzielung zwei unterschiedlicher Durchführungsdurchmesser ermöglichen. Im Ausführungsbeispiel weisen die Nuten 5 bzw. Vorsprünge 6 eine Tiefe bzw. Höhe von 1 mm auf.

Beidseitig der Ausnehmung 3 sind in die Schellenhälfte 2 weiterhin zwei Bohrungen 7 eingebracht. Die Bohrungen 7 dienen der Durchführung einer Schraube zur Verspannung der beiden Schellenhälften 2 gegeneinander. Darüber hinaus sind in den Schellenhälften zwischen den Bohrungen 7 Ausnehmungen 8 eingebracht. Die Ausnehmungen 8 dienen der Materialersparnis sowie der Gewichtsreduzierung der Schellenhälften 2.

Durch die konstruktive Ausgestaltung der Schellenhälften 2 mit den kammartigen Profilen 4 kann durch die Lage der oberen Schellenhälfte 2 zur unteren Schellenhälfte 2 der Durchmesser der durch die Ausnehmungen 3 gebildeten Durchführung 30 variiert werden. Im Ausführungsbeispiel hat der halbkreisförmige Querschnitt der Ausnehmung 3 einen Durchmesser von 19 mm. Bei Montage der beiden Schellenhälften 2 derart, dass die Vorsprünge 6 aufeinander liegen ist ein Durchmesser der durch die Ausnehmungen 3 gebildeten Durchführung 30 von 19 mm gebildet. Wird die oberen Schellenhälfte 2 um 180 Grad gedreht, greifen die Vorsprünge 6 in die Nuten 5 ein, wodurch sich nahezu kreisförmiger Querschnitt der durch die Ausnehmungen 3 gebildeten Durchführung 30 mit einem Durchmesser von 17 mm ergibt. Genau genommen ist die durch die Ausnehmungen 3 gebildete Durchführung elliptisch ausgebildet, wodurch sich seitlich zwischen dem eingespannten Schlauch bzw. Rohr ein Spalt ergibt. Dieser Spalt kann durch das Vorsehen elastischer Einsätze ausgeglichen werden. Alternativ können die Ausnehmungen 3 auch mit einer Elastomerschicht versehen sein, welche den Ausgleich der unterschiedlichen Radien von Schlauch bzw. Rohr und Durchführung 30 bewirkt.

## Patentansprüche

1. Vorrichtung zur Befestigung von Rohren oder Schläuchen, umfassend zwei miteinander verbindbarer Befestigungsteile mit Ausnehmungen, welche im montierten Zustand eine Durchführung bilden, **dadurch gekennzeichnet, dass** die Befestigungsteile (2) jeweils beidseitig der Ausnehmung (3) mit einem kammartigen Profil (4) versehen sind, welches durch abwechselnd angeordnete Nuten (5) und Vorsprünge (6) gebildet ist, wobei die Nuten (5) und Vorsprünge (6) jeweils spiegelverkehrt versetzt zu den jeweils gegenüberliegend angeordneten Nuten (5) und Vorsprüngen (6) angeordnet sind, derart, dass die Vorsprünge (6) eines Befestigungsteils (2) bei der Montage jeweils in die Nuten (5) des gegenüberliegenden Befestigungsteils (2) in Eingriff bringbar sind und, bei Verdrehung eines Befestigungsteils (2) um 180 Grad relativ zum gegenüberliegenden Befestigungsteil (2), die Vorsprünge (6) der beiden Befestigungsteile aufeinander liegend positionierbar sind, wobei die Nuten (5) jeweils gegenüberliegend angeordnet sind.

2. Vorrichtung nach Anspruch 1, **dadurch gekennzeichnet, dass** die beiden Befestigungsteile (2) zumindest an ihren zueinander zugewandten Seiten, bevorzugt insgesamt identisch ausgebildet sind.

3. Vorrichtung nach Anspruch 1 oder 2, **dadurch gekennzeichnet, dass** die Befestigungsteile (2) im Wesentlichen aus Kunststoff ausgebildet sind.

4. Vorrichtung nach einem der vorgenannten Ansprüche, **dadurch gekennzeichnet, dass** wenigstens eine Ausnehmung (3) eines Befestigungsteils (2) mit einer Elastomerschicht versehen ist.
